# FASCICULE DE BREVET EUROPEEN

(11) **EP 1 802 176 B1**
(45) Date de publication et mention de la délivrance du brevet: **13.06.2012**
(21) Numéro de dépôt: 06125375.3
(22) Date de dépôt: 05.12.2006
(51) Int. Cl.: H05B 3/06, H05B 3/50, B60H 1/22

(54) **Optimisation d'un dispositif de chauffage**
Optimierung einer Heizvorrichtung
Optimization of a heating device

(30) Priorité: 21.12.2005 FR 0513012
(43) Date de publication de la demande: 27.06.2007
(73) Titulaire: Valeo Systèmes Thermiques, 78321 Le Mesnil St Denis Cedex (FR)
(72) Inventeur: Pierron, Frederic, 78120 Rambouillet (FR); Colette, Olivier, 78320 Le Mesnil St Denis (FR)
(74) Mandataire: Léveillé, Christophe

(56) Documents cités:
- EP-A- 1 353 131
- WO-A-2005/049350
- US-A- 6 055 360

## Description

Le secteur technique de la présente invention est celui des dispositifs de chauffage ou radiateur de type électrique destinés à être montés dans une installation de ventilation, chauffage et/ou climatisation d'un véhicule automobile.

Elle concerne en particulier un radiateur de chauffage dit additionnel muni de résistances électriques, par exemple des résistances à coefficient de température positif (CTP), pour réaliser un appoint de chaleur pratiquement immédiat dans les véhicules déficient en chaleur au démarrage.

Les radiateurs de l'art antérieur présente un corps de chauffe traversé par le flux d'air à réchauffer à l'intérieur de l'installation de ventilation, chauffage et/ou climatisation du véhicule. Ces radiateurs électriques sont conçus en fonction de la demande du fabricant automobile, c'est-à-dire de la place allouée pour intégrer un tel radiateur ainsi que le type et la forme du connecteur présent sur le faisceau électrique du véhicule. En effet, les électrodes qui conduisent le courant électrique vers les pierres à effet CTP sont mises en forme pour se prolonger dans le connecteur de raccordement. Chaque radiateur présente une forme de connecteur apte à recevoir le connecteur du faisceau différente d'un constructeur automobile à l'autre. Un exemple de radiateur est illustré dans le document US 6 055 360.

Cette disparité dans la forme des connecteurs entraîne des inconvénients majeurs.

Un des principaux inconvénients est qu'il n'est pas possible de standardiser les éléments communs des radiateurs spécifiques à chaque constructeur avec pour conséquence une augmentation des coûts de fabrication accompagnée d'une augmentation des coûts relatifs à la logistique. En effet, les différentes références de radiateurs imposent une gestion des stocks compliquée et coûteuse.

Le but de la présente invention est donc de résoudre les inconvénients décrits ci-dessus principalement en standardisant la fabrication du corps de chauffe du radiateur et en reportant la mise en version, c'est-à-dire l'adaptation au connecteur du constructeur, sur une pièce plus petite, moins coûteuse à fabriquer et plus facile à stocker. Cette pièce est un connecteur qui fait le lien mécanique et électrique entre le corps de chauffe et le connecteur du constructeur, ce connecteur présentant une première interface standardisée pour se monter sur le corps de chauffe et une deuxième interface modulable et adaptable en fonction de la forme du connecteur monté sur le faisceau électrique du constructeur.

Dans la même optique, la gestion électronique de commande du dispositif de chauffage est souvent dépendante de chacun des constructeurs automobiles ce qui va aussi à l'encontre de la standardisation des éléments constituant un radiateur électrique. C'est pourquoi le dispositif de chauffage selon l'invention ne présente pas de module de commande électronique et se limite à la partie puissance du radiateur électrique.

L'invention a donc pour objet un dispositif de chauffage de type électrique, notamment destiné à réchauffer un flux d'air traversant une installation de ventilation, chauffage et/ou climatisation d'un véhicule automobile, comprenant :
- un corps de chauffe constitué d'un cadre dans lequel est installé au moins un élément chauffant,
- un connecteur destiné à relier l'élément chauffant à une alimentation électrique en provenance du véhicule, le connecteur présentant une première interface vouée à être reliée à l'élément chauffant et une deuxième interface destinée à se connecter à l'alimentation électrique en provenance du véhicule, caractérisé en ce que le cadre comprend un logement qui réceptionne dans son volume intérieur la première interface, la première interface et le corps de chauffe étant standardisés alors que la deuxième interface est adaptable à la forme du connecteur source.

Selon une première caractéristique de l'invention, le connecteur comporte au moins deux conducteurs électriques reliés d'un côté à l'élément chauffant et de l'autre à l'alimentation électrique.

Selon une deuxième caractéristique de l'invention, l'élément chauffant est constitué de deux électrodes entre lesquels sont installés deux dissipateurs, les deux dissipateurs enserrant au moins une pierre à effet CTP, ladite pierre et les dissipateurs étant reliés par collage.

Selon une autre caractéristique de l'invention, au moins un des conducteurs électriques est relié de manière inamovible à au moins une des électrodes de l'élément chauffant.

Selon encore une caractéristique de l'invention, la deuxième interface coopère de manière amovible avec un connecteur complémentaire électriquement relié à l'alimentation électrique du véhicule par l'intermédiaire d'un faisceau.

Selon encore une autre caractéristique de l'invention, le connecteur complémentaire prend la forme d'une partie mâle apte à pénétrer dans une partie femelle formée dans la deuxième interface.

La première interface présente au moins un moyen de retenu pour fixer le connecteur sur le cadre.

Avantageusement, la deuxième interface comporte au moins un moyen de retenu du connecteur complémentaire quand la partie male est insérée dans la partie femelle.

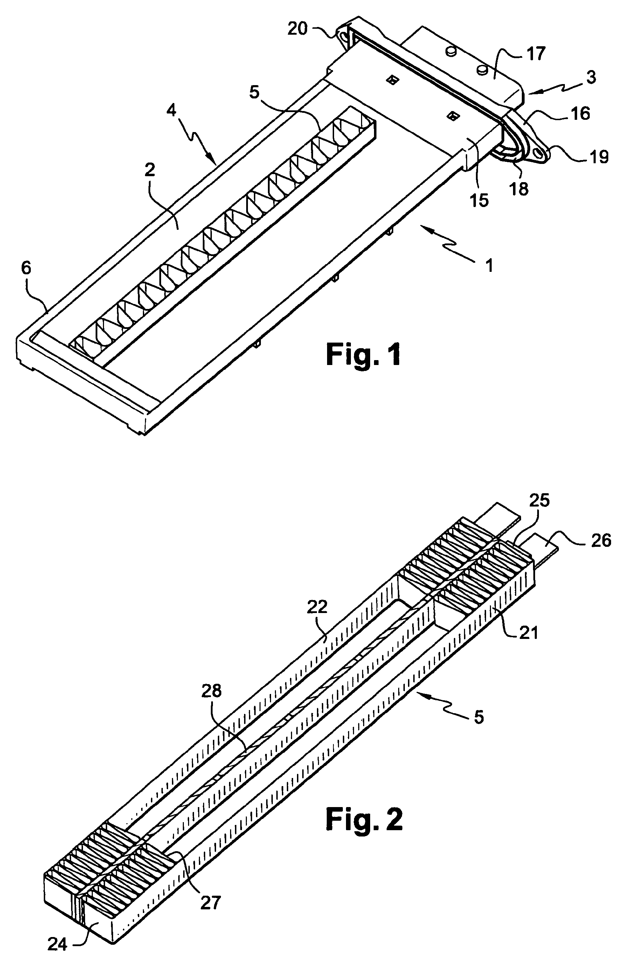

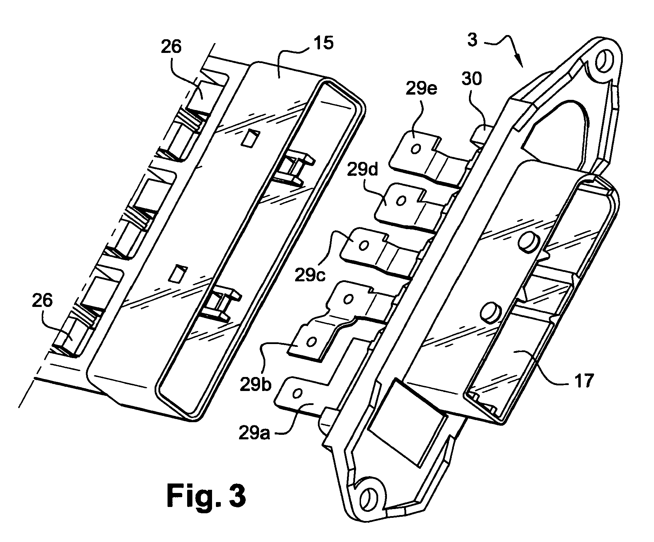

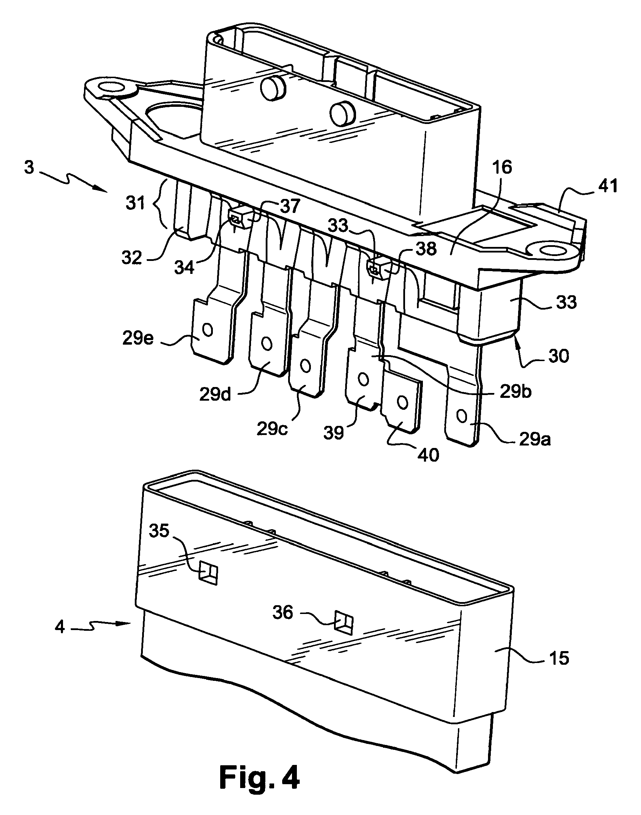

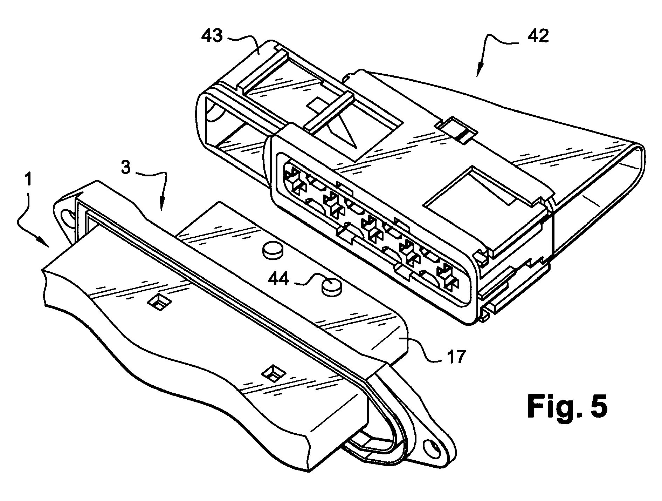

D'autres caractéristiques, détails et avantages de l'invention ressortiront plus clairement à la lecture de la description donnée ci-après à titre indicatif en relation avec des dessins. Ces dessins pourront non seulement servir à mieux faire comprendre la présente invention, mais aussi contribuer à sa définition, le cas échéant. Ces dessins sont :
- une figure 1 est une vue en perspective d'un dispositif de chauffage ou radiateur selon l'invention,
- une figure 2 est une vue de détails illustrant la constitution d'un élément chauffant du dispositif de chauffage selon l'invention,
- une figure 3 est une vue en perspective du connecteur détaché du corps de chauffe dans le dispositif selon l'invention,
- une figure 4 est une vue de détails de la figure 3,
- une figure 5 est une vue illustrant le connecteur source à proximité du connecteur du dispositif de chauffage selon l'invention.

La figure 1 illustre un dispositif de chauffage 1 de type électrique destiné à réchauffer un flux d'air. Ce type de radiateur électrique est utilisé dans les véhicules automobiles pour faire un appoint de chaleur pratiquement immédiat. Il est habituellement placé transversalement dans la veine d'air principale de l'installation de sorte à transformer l'énergie électrique prélevée sur le véhicule en énergie thermique restituée dans l'air traversant l'installation de climatisation. Le dispositif de chauffage 1 selon l'invention ne comprend pas de module électronique de commande. En effet, la gestion de commande de ce radiateur électrique est localisée ailleurs sur le véhicule, par exemple dans un calculateur électronique de climatisation ou dans un calculateur électronique d'habitacle.

Ce dispositif est constitué d'un corps de chauffe 2 et d'un connecteur 3, ce dernier permet de relier électriquement le radiateur électrique à l'alimentation ou source sur le véhicule.

Le corps de chauffe 2 est constitué d'un cadre 4 en plastique, par exemple en polypropylène ou en polyamide, à l'intérieur duquel sont intégrés des éléments chauffants 5. Chaque élément est susceptible de dissiper une puissance de l'ordre de 330 watts. Le radiateur électrique comprend trois éléments chauffants si bien que ce radiateur électrique peut dissiper une puissance totale voisine de 1000 watts.

La zone de chauffe du cadre 4 est terminée par un logement 15 de dimension sensiblement identique à la zone de chauffe, c'est-à-dire que ce logement s'étend sur la largeur de la zone de chauffe. Ce logement 15 reçoit le connecteur 3. Ce dernier comporte une première interface (décrit en détail en référence à la figure 4) qui s'étend à l'intérieur du logement 15, la partie accessible étant constituée d'un bord d'accostage 16 et d'une deuxième interface 17 destinée à se connecter à l'alimentation électrique en provenance du véhicule.

Le bord d'accostage 16 comporte une rainure périphérique 18 dans lequel un joint peut être positionné de sorte à assurer l'étanchéité à l'air entre l'intérieur de l'installation de climatisation où s'étend le cadre 4 et l'extérieur de l'installation où s'étend le bord d'accostage 16 et la deuxième interface 17. Le bord d'accostage 16 comprend en outre deux oreillettes 19 et 20 qui s'étendent latéralement et au travers desquelles est prévu un trou de fixation. Ces trous de fixation en combinaison avec le cadre 4 permettent de maintenir solidement le radiateur électrique en position dans l'installation de ventilation, chauffage et ou climatisation.

La figure 2 montre un élément chauffant 5 autrement appelé barreau chauffant. Cet élément chauffant est constitué de deux électrodes conductrices 21 et 22 qui s'étendent longitudinalement. Chacune de ces électrodes présente une forme générale en « C » dans son plan longitudinal car les deux extrémités 24 et 25 de l'électrode sont repliées vers un même point. L'extrémité référencée 25 comporte en outre une terminaison 26 formée par pliage de l'électrode 21. A titre d'exemple, le matériau utilisé pour la fabrication de l'électrode est le laiton ou le cuivre étamé, ou encore l'aluminium. La forme en « C » de l'électrode permet d'enfermer un ruban métallique replié sur lui-même à intervalle régulier de sorte à former un dissipateur 27 thermique autrement appelé intercalaire. Pour des raisons de clarté, les dissipateurs thermiques 27 ne sont représentés que partiellement, la partie non représentée étant identique à la représentation apparente sur la figure 2.

L'élément chauffant 5 comporte donc deux électrodes 21 et 22 placées en vis-à-vis l'une par rapport à l'autre. Ces deux électrodes enserrent les deux dissipateurs thermiques 27 pour venir en appui contre des pierres à effet CTP 28 (Coefficient de Température Positif). Dans l'exemple représenté sur cette figure, on constate que l'élément chauffant 5 comporte six pierres à effet CTP 28 espacées les unes des autres par un léger intervalle.

Les pierres à effet CTP 28 sont maintenues collées sur les dissipateurs 27 au moyen d'une colle thermique mais suffisamment forte pour octroyer un contact électrique entre le dissipateur 27 et la pierre à effet CTP 28.

Il faut noter les électrodes 21 et les dissipateurs 27 qui leur sont dédiées sont parcourus par des potentielles électriques différents de sorte à alimenter électriquement les deux faces de la pierre 28 à effet CTP.

La figure 3 illustre en éclaté le cadre 4 et le connecteur 3. Lorsque trois éléments chauffants 5 du type de ceux décrits en rapport avec la figure 2 sont installés dans le cadre 4, on a alors une rangée de six terminaisons 26 à alimenter en énergie électrique.

Le connecteur 3 comporte ici 5 conducteurs électriques 29a à 29e reliés d'un côté aux éléments chauffants et de l'autre à l'alimentation électrique en provenance du véhicule. Ce connecteur comprend une première interface 30 et la deuxième interface 17.

La première interface 30 coopère avec le logement 15, ce dernier présentant une forme générale rectangulaire qui définit un volume intérieur dans lequel s'insère la première interface 30. On notera à ce stade de la description que la forme des éléments décrits n'est pas dictée par les considérations d'ordre technique du constructeur automobile.

La deuxième interface 17 est la zone qui va s'adapter aux contraintes de chacun des constructeurs automobiles. En effet, la forme de cette interface est dictée par la forme spécifique d'un connecteur source électriquement relié à l'alimentation électrique du véhicule par l'intermédiaire de son faisceau. Ce connecteur source peut prendre différente forme extérieure et comporter des moyens de blocage radicalement différent d'un constructeur à l'autre.

La figure 4 représente de manière plus détaillée le connecteur 3 et le logement 15. La première interface 30 présente une zone de guidage 31 moulée dans le même matériau que celui dans lequel le connecteur 3 est fabriqué. La zone de guidage 31 comporte deux guides 32 et 33, ces derniers présentant une forme extérieure complémentaire à celle du volume intérieur du logement 15 de sorte à coulisser dans le logement 15. La zone de guidage 31 comporte par ailleurs deux plots de solidarisation 33 et 34 qui coopèrent avec des trous 35 et 36 pratiqués dans la paroi externe du logement 15 de sorte à maintenir et fixer le connecteur 3 sur le cadre 4. Les plots de solidarisation 33 et 34 s'étendent dans le même plan que le bord d'accostage 16 et comportent chacun un chanfrein référencé 37 et 38 pour faciliter l'insertion de la première interface 30 dans le logement 15. Au cours de cette insertion, les parois du logement 15 se déforment sous l'effort des plots de solidarisation jusqu'à ce que ces derniers pénètrent dans leurs trous respectifs 35 et 36. Les plots de solidarisation 33 et 34 ainsi que leurs trous respectifs 36 et 35 définissent ensemble les moyens de retenu du connecteur 3 dans le cadre 4.

On constate sur cette figure que certains des conducteurs électriques 29a à 29e alimentent deux éléments chauffant à la fois. En effet, le conducteur 29b présente une première extrémité 39 et une deuxième extrémité 40. Ces deux extrémités prennent la forme d'un plat élargi par rapport au conducteur électrique 29b et s'étendent dans deux plans parallèles mais différents.

On notera par ailleurs que le bord d'accostage 16 comporte à sa périphérie des zones de renfort 41 dont la fonction est d'augmenter la résistance mécanique du bord d'accostage.

Lorsque le connecteur 3 est inséré dans le cadre 4, on relie de manière inamovible les extrémités des conducteurs électriques 29a-29e aux terminaisons des électrodes de l'élément chauffant. Cette liaison inamovible se fait par soudage, brasage, rivetage, sertissage de façon à limiter les résistances de contact et réduire au mieux l'encombrement de la connexion.

La figure 5 montre une extrémité du dispositif de chauffage 1 et un connecteur source 42 relié au faisceau (non représenté) du véhicule. Ce connecteur source 42 amène la puissance électrique nécessaire à l'alimentation du dispositif de chauffage 1 et est monté de manière amovible sur la deuxième interface 17 du connecteur 3. La deuxième interface 17 prend la forme d'une partie mâle de sorte à pénétrer dans une partie femelle matérialisée par le connecteur source 42. Ce dernier présente un moyen de retenu constitué d'un loquet 43 et d'au moins un ergot 44. Le loquet 43 coulisse dans le connecteur source 42 quand ce dernier est inséré sur la deuxième interface 17. Les ergots 44 coopèrent alors avec un coulisseau pratiqué dans la paroi interne du loquet 43.

On notera dans la description ci-dessous qu'il n'est pas fait mention d'un quelconque dispositif de commande du type transistor ou carte électronique de commande intégré au dispositif de chauffage, ce dernier se limitant à des composants facilement standardisables à l'exception du connecteur 3.

On comprendra aussi que le connecteur 3 est une pièce distincte du cadre 4 dont les fonctions sont :
- de raccorder électriquement le connecteur source 42 du véhicule aux éléments chauffants installés dans le cadre 4,
- de s'adapter à la forme spécifique du connecteur source 42 au moyen de la deuxième interface 17.

L'invention vise par ailleurs le procédé d'assemblage d'un dispositif de chauffe 1 tel que décrit ci-dessus, dans lequel on :
- solidarise le connecteur 3 sur le cadre 4 à l'aide des moyens de retenu (33, 34, 35, 36), en particulier grâce à la coopération entre les plots de solidarisation 33 et 34 et les trous correspondants 36 et 35,
- relit électriquement de manière inamovible au moins un des conducteurs électriques 29a à 29e du connecteur 3 à au moins un des éléments chauffants 5.

La description ci-dessus fait référence à l'utilisation de pierres à effet CTP mais l'invention couvre aussi un radiateur électrique utilisant un polymère à effet CTP. Dans ce dernier cas, le polymère à effet CTP se présente sous la forme d'un ruban pris en sandwich entre les dissipateurs 27 et relié à ceux-ci par collage.

Par ailleurs, il sera bien entendu compris que l'alimentation électrique du véhicule par l'intermédiaire d'un faisceau vers le dispositif de chauffage selon l'invention se fera par exemple via des organes de commutation situés en dehors du dispositif de chauffage 1. Ces organes de commutation sont par exemple des relais, transistors et/ou fusibles.

## Revendications

1. Dispositif de chauffage (1) de type électrique destiné à réchauffer un flux d'air traversant une installation de ventilation, chauffage et/ou climatisation d'un véhicule automobile, comprenant :
- un corps de chauffe (2) constitué d'un cadre (4) dans lequel est installé au moins un élément chauffant (5),
- un connecteur (3) destiné à relier l'élément chauffant (5) à une alimentation électrique en provenance du véhicule, le connecteur (3) présentant une première interface (30) vouée à être reliée au corps de chauffe et une deuxième interface (17) destinée à se connecter à l'alimentation électrique en provenance du véhicule, **caractérisé en ce que** le cadre (4) comprend un logement (15) qui réceptionne dans son volume intérieur la première interface (30), ladite première interface (30) et le corps de chauffe (2) sont standardisés alors que la deuxième interface (17) est adaptable à la forme d'un connecteur source (42).

2. Dispositif de chauffage (1) selon la revendication 1, **caractérisé en ce que** le connecteur (3) comporte au moins deux conducteurs électriques (29a-29e) reliés d'un côté à l'élément chauffant (5) et de l'autre à l'alimentation électrique.

3. Dispositif de chauffage (1) selon l'une des revendications 1 ou 2, **caractérisé en ce que** l'élément chauffant (5) est constitué de deux électrodes (21) entre lesquelles sont installés deux dissipateurs (27), les deux dissipateurs (27) enserrant au moins une pierre à effet CTP (28), ladite pierre et les dissipateurs étant reliés par collage.

4. Dispositif de chauffage (1) selon la revendication 3, **caractérisé en ce qu'**au moins un des conducteurs électriques (29a-29e) est relié de manière inamovible à au moins une des électrodes (21) de l'élément chauffant (5).

5. Dispositif de chauffage (1) selon l'une quelconque des revendications 1 à 4, **caractérisé en ce que** la deuxième interface (17) est apte à coopèrer de manière amovible avec un connecteur source (42) électriquement relié à l'alimentation électrique du véhicule par l'intermédiaire d'un faisceau.

6. Dispositif de chauffage selon l'une quelconque des revendications 1 à 5, **caractérisé en ce que** la première interface (30) présente au moins un moyen de retenue (33, 34, 35, 36) pour fixer le connecteur (3) sur le cadre (4).

## Claims

1. Heating device (1) of the electrical type designed to heat a flow of air passing through an installation for the ventilation, heating and/or air conditioning of a motor vehicle, comprising:
- a heating body (2) consisting of a frame (4) in which at least one heating element (5) is installed,
- a connector (3) designed to connect the heating element (5) to an electrical power supply originating from the vehicle, the connector (3) having a first interface (30) devoted to being connected to the heating body and a second interface (17) designed to be connected to the electrical power supply originating from the vehicle, **characterized in that** the frame (4) comprises a housing (15) which accommodates in its internal volume the first interface (30), the said first interface (30) and the heating body (2) are standardized while the second interface (17) can be adapted to the shape of a source connector (42).

2. Heating device (1) according to Claim 1, **characterized in that** the connector (3) comprises at least two electrical conductors (29a-29e) connected on one side to the heating element (5) and on the other to the electrical power supply.

3. Heating device (1) according to one of Claims 1 and 2, **characterized in that** the heating element (5) consists of two electrodes (21) between which two dissipaters (27) are installed, the two dissipaters (27) enclosing at least one PTC stone (28), the said stone and the dissipaters being connected by bonding.

4. Heating device (1) according to Claim 3, **characterized in that** at least one of the electrical conductors (29a-29e) is connected irremovably to at least one of the electrodes (21) of the heating element (5).

5. Heating device (1) according to any one of Claims 1 to 4, **characterized in that** the second interface (17) is capable of interacting removably with a source connector (42) electrically connected to the electrical power supply of the vehicle via a wiring loom.

6. Heating device according to any one of Claims 1 to 5, **characterized in that** the first interface (30) has at least one retaining means (33, 34, 35, 36) for fastening the connector (3) to the frame (4).

## Patentansprüche

1. Elektrische Heizvorrichtung (1), die dazu bestimmt ist, einen eine Lüftungs-, Heiz- und/oder Klimatisierungsanlage eines Kraftfahrzeugs durchquerenden Luftstrom aufzuwärmen, die enthält:
- einen Heizkörper (2), der aus einem Rahmen (4) besteht, in dem mindestens ein Heizelement (5) installiert ist,
- einen Verbinder (3), der dazu bestimmt ist, das Heizelement (5) mit einer vom Fahrzeug kommenden Stromversorgung zu verbinden, wobei der Verbinder (3) eine erste Schnittstelle (30), die der Verbindung mit dem Heizkörper gewidmet ist, und eine zweite Schnittstelle (17) aufweist, die dazu bestimmt ist, an die vom Fahrzeug kommende Stromversorgung angeschlossen zu werden,
**dadurch gekennzeichnet, dass** der Rahmen (4) eine Aufnahme (15) enthält, die in ihrem Innenvolumen die erste Schnittstelle (30) aufnimmt, wobei die erste Schnittstelle (30) und der Heizkörper (2) genormt sind, während die zweite Schnittstelle (17) an die Form eines Quellenverbinders (42) angepasst werden kann.

2. Heizvorrichtung (1) nach Anspruch 1, **dadurch gekennzeichnet, dass** der Verbinder (3) mindestens zwei elektrische Leiter (29a-29e) aufweist, die einerseits mit dem Heizelement (5) und andererseits mit der Stromversorgung verbunden sind.

3. Heizvorrichtung (1) nach einem der Ansprüche 1 oder 2, **dadurch gekennzeichnet, dass** das Heizelement (5) aus zwei Elektroden (21) besteht, zwischen denen zwei Ableiter (27) eingebaut sind, wobei die zwei Ableiter (27) mindestens einen PTC-Stein (28) umklammern, wobei der Stein und die Ableiter durch Kleben miteinander verbunden sind.

4. Heizvorrichtung (1) nach Anspruch 3, **dadurch gekennzeichnet, dass** mindestens einer der elektrischen Leiter (29a-29e) unentfernbar mit mindestens einer der Elektroden (21) des Heizelements (5) verbunden ist.

5. Heizvorrichtung (1) nach einem der Ansprüche 1 bis 4, **dadurch gekennzeichnet, dass** die zweite Schnittstelle (17) entfernbar mit einem Quellenverbinder (42) zusammenwirken kann, der elektrisch mit der Stromversorgung des Fahrzeugs über einen Kabelbaum verbunden ist.

6. Heizvorrichtung nach einem der Ansprüche 1 bis 5, **dadurch gekennzeichnet, dass** die erste Schnittstelle (30) mindestens eine Halteeinrichtung (33, 34, 35, 36) aufweist, um den Verbinder (3) am Rahmen (4) zu befestigen.
